# EUROPÄISCHE PATENTSCHRIFT

(11) **EP 1 101 266 B1**
(45) Veröffentlichungstag und Bekanntmachung des Hinweises auf die Patenterteilung: **25.09.2002**
(21) Anmeldenummer: 99945862.3
(22) Anmeldetag: 01.07.1999
(51) Int. Cl.: H02H 9/00

(54) **SCHALTUNGSANORDNUNG ZUR EINSCHALTSTROMBEGRENZUNG FÜR EINEN TRANSFORMATOR**
CIRCUIT FOR LIMITING THE INRUSH CURRENT FOR A TRANSFORMER
CIRCUIT POUR LA LIMITATION DU COURANT D'APPEL D'UN TRANSFORMATEUR

(30) Priorität: 24.07.1998 DE 19833412
(43) Veröffentlichungstag der Anmeldung: 23.05.2001
(73) Patentinhaber: SIEMENS AKTIENGESELLSCHAFT, 80333 München (DE)
(72) Erfinder: GOLLER, Hugo, D-80797 München (DE); HOFFMANN, Klaus, D-83646 Bad Tölz-Ellbach (DE)
(86) Internationale Anmeldenummer: DE9902006
(87) Internationale Veröffentlichungsnummer: WO00007273

(56) Entgegenhaltungen:
- GB-A- 2 320 145
- US-A- 4 175 276

## Beschreibung

Die Erfindung bezieht sich auf eine Schaltungsanordnung zur Einschaltstrombegrenzung für einen Transformator.

Ein Transformator belastet für einen kurzen Augenblick nach dem Einschalten eine Stromquelle nur mit dem ohmschen Anteil des Drahtwiderstandes seiner Primärwicklung. Je niederohmiger die Primärwicklung, um so größer ist die Einschaltstromspitze und je größer der zu magnetisierende Eisenkern, um so breiter, also energiereicher, ist diese Stromspitze. Dadurch kann die Netzspannung zusammenbrechen oder es können Sicherungen ansprechen. Daher ist der Einschaltstrom zu begrenzen.

Bekannt sind Verfahren, die Ohmsche Widerstände zwischen den Eingang der Primärwicklung des Transformators und der Stromquelle anordnen, damit der Einschaltstrom reduziert ist. Nach dem Einschalten führen diese Widerstände zu dem unerwünschten Ergebnis, daß an ihnen ein zusätzlicher Spannungsabfall auftritt. Außerdem erwärmen sich die Widerstände beim Betrieb, und können durch die Hitzeentwicklung zerstört werden.

Aus der GB2320145 A ist bekannt, zum Begrenzen des Einschaltstroms beim Laden einer Kapazität einen Schalter zu verwenden, zu welchem ein Widerstand in Reihe mit einem Kaltleiter parallel geschaltet ist. Der Schalter schaltet hierbei, nachdem die Kapazität aufgeladen worden ist.

Bekannt ist darüber hinaus, die Widerstände nach einer fest vorgegebenen Zeit, nach der von einer ausreichenden Vormagnetisierung des Transformators ausgegangen wird, zu überbrücken. Die Überbrückung geschieht beispielsweise durch ein zeitgesteuertes Relais. Durch die feste Zeitvorgabe fehlt allerdings eine Funktionsüberprüfung des Transformators, so daß es im Fall eines Kurzschlusses im Transformator auch nach der fest vorgegebenen Zeit zu einem Netzzusammenbruch kommen kann.

Es ist die Aufgabe der Erfindung, eine einfache Schaltungsanordnung zur Einschaltstrombegrenzung für Transformatoren anzugeben zugeben, die die volle Betriebsspannung erst nach einer Funktionsüberprüfung des Transformators zur Verfügung stellt.

Die Aufgabe wird gelöst mit einer Schaltungsanordnung gemäß Patentanspruch 1.

Dabei wird zum einen über eine Prüfwicklung auf der Sekundärseite des Transformators überprüft, ob der Transformator eingeschaltet ist. Beim erfolgreichen Einschalten schaltet ein Schütz zwischen Betriebsspannungsquelle und Transformator und dadurch werden die Widerstände überbrückt. Zusätzlich sind Kaltleiter vorgesehen, die beim Versagen der Schützschaltung dafür sorgen, daß die Widerstände nicht überlastet werden.

In vorteilhafter Weise ist bei einer Sekundärwicklung aus Mehrphasenwicklungen an der Prüfwicklung ein Gleichrichter nachgeschaltet.

In einer vorteilhaften Ausgestaltung der Schaltungsanordnung nach Patentanspruch 3 kann die Ansprechspannung für den Schütz auch von einer Einphasenwicklung abgeleitet werden. Bei einer Ansteuerung mit Wechselspannung entfällt dann der Gleichrichter.

Durch einen Hilfskontakt gemäß Anspruch 4, der den weiteren Widerstand beim Einschalten zunächst überbrückt und der nach Einschalten des Schützes unterbrochen wird, wird eine optimale Ansteuerspannung für den Schütz eingestellt.

Ausführungsbeispiele der Erfindung sind in den Figuren der Zeichnung dargestellt. Dabei zeigen
Figur 1 eine Schaltungsanordnung zur Einschaltstrombegrenzung für einen Transformator und
Figur 2 a bis c verschiedene Ausführungsbeispiele zur Ermittlung einer Ansprechspannung für den Schütz aus einer Prüfwicklung der Sekundärseite des Transformators.

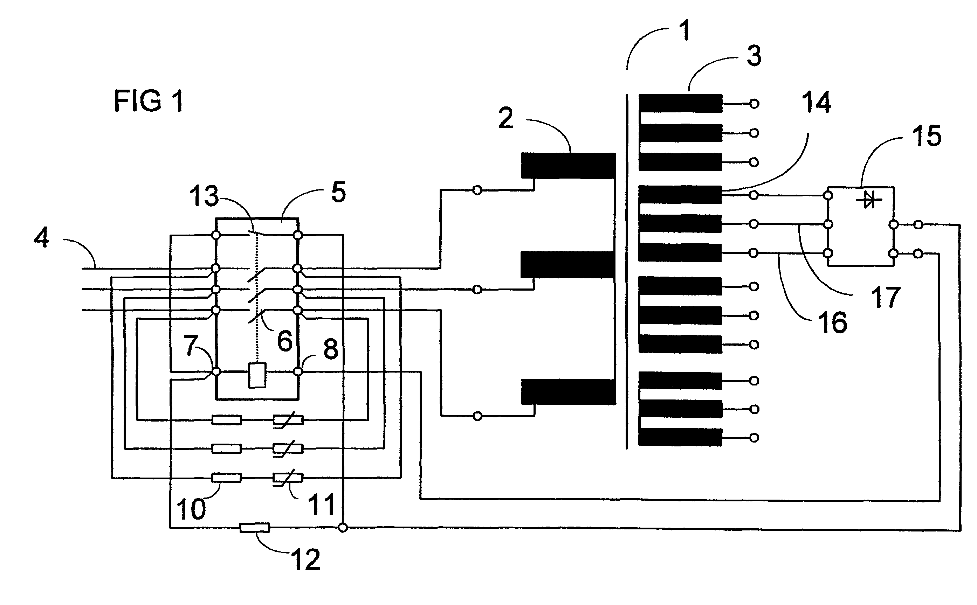

In Figur 1 ist dargestellt, wie ein Transformator 1 mit einer Primärwicklung 2 und einer Sekundärseite 3 an einer Betriebsspannung 4 angeschlossen ist. Dabei ist zwischen die Betriebsspannung 4 und die Primärwicklung 2 ein Schütz 5 geschaltet, dessen Schalter 6 vor dem Einschalten offen sind. Erst beim Anlegen einer Versorgungsspannung an den Versorgungseingang 7 des Schützes 5 und den Versorgungsausgang 8 des Schützes 5 schließen sich die Schalter 6, so daß die Betriebsspannung 4 an der Primärwicklung 2 anliegt. Sind die Schalter 6 offen, so fließt nach dem Einschalten der Betriebsspannung 4 der Strom über die parallel zum Schütz 5 geschalteten Widerstände 10 und die dazu in Serie geschalteten Kaltleiter 11. Als Kaltleiter dient dabei ein Widerstand, der einen positiven Temperaturkoeffizinenten (PTC) aufweist. Der Widerstand erhöht sich dabei mit steigender Temperatur des Kaltleiters 11. Die ohmschen Widerstände begrenzen den Einschaltstrom, der mindestens so groß gewählt werden muß, daß sich sekundärseitig an einer Prüfwicklung 14 des Transformators 1 eine induzierte Spannung aufbauen kann. Als Prüfwicklung 14 kann dabei eine ausgewählte Sekundärwickung dienen. Die induzierte Spannung wird über einen weiteren Widerstand 12 an den Versorgungseingang 7 des Schützes 5 gelegt. Wenn diese Spannung die Schaltschwelle des Schützes 5 überschreitet, überbrücken die Strombahnen der Schaltkontakte 6 die Widerstände 10 und die Kaltleiter 11. Die Strombegrenzung wird dadurch unwirksam und der Transformator 1 kann belastet werden. Gleichzeitig mit dem Überbrücken der Strombegrenzung unterbricht ein Hilfskontakt 13 die Brücke über den weiteren Widerstand 12 und stellt damit die optimale Ansteuerspannung für den Dauerbetrieb des Schützes 5 ein.

Schaltet der Schütz 5 durch eine Funktionsstörung (Leitungsbruch usw.) bedingt nicht, erwärmt sich der in Serie zu den Widerständen 10 geschaltete Kaltleiter 11. Dieser wird hochohmig und drosselt den Strom bis auf einen kleinen Reststrom, gerade so viel, daß der Kaltleiter 11 heiß und dadurch hochohmig bleibt. So werden die Widerstände 10 vor Überlastung geschützt. Dieser Reststrom reicht aber nicht aus, den Transformator 1 zu magnetisieren. Eine Inbetriebnahme von angedachten Verbrauchern ist in diesem Störfall unmöglich.

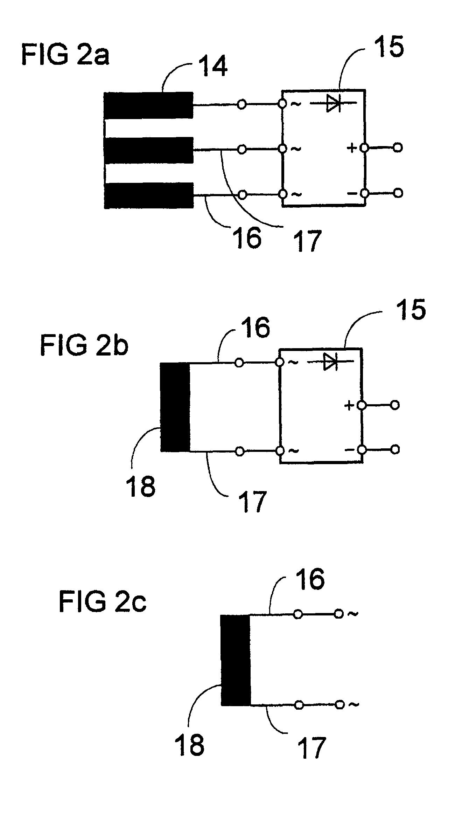

Wie in Figur 2c dargestellt ist, kann die Ansprechspannung für den Schütz 5 auch von einer Einphasenwicklung 18 abgeleitet werden. Bei einer Ansteuerung mit Wechselspannung entfällt dann der Gleichrichter 15.

Die erfindungsgemäße Schaltungsanordnung stellt somit sicher, daß der Einschaltstrom für einen Transformator reduziert wird, und dafür vorgesehene Widerstände 10 nicht überlastet werden.

## Patentansprüche

1. Schaltungsanordnung zur Einschaltstrombegrenzung für einen Transformator (1)
mit einem Schütz (5), an dessen Schaltungseingänge die Betriebsspannung (4) für den Transformator (1) angelegt ist und dessen Schaltungsausgänge mit den Primärwicklungen (2) des Transformators (1) verbunden sind,
mit in Serie geschalteten ohmschen Widerständen (10) und Kaltleitern (11), die parallel zum Schütz (5) geschaltet sind, **gekennzeichnet durch**
eine Prüfwicklung (14) auf der Sekundärseite (3) des Transformators (1) mit mindestens zwei Anschlüssen (16,17), mit einem weiteren Widerstand (12), wobei der weitere Widerstand (12) zwischen einen ersten Anschluss (16) der Prüfwicklung (14) und dem Versorgungseingang (7) des Schützes (5) geschaltet ist, und
wobei der Versorgungsausgang (8) des Schützes mit einem zweiten Anschluss (17) der Prüfwicklung (4) verbunden ist,
wobei der Schütz (5) schließt und die in Serie geschalteten ohmschen Widerstände (10) und Kaltleiter (11) überbrückt, wenn die in der Prüfwicklung (4) induzierte und an Versorgungseingang (7) und Versorgungsausgang (8) anliegende Spannung die Schaltschwelle des Schützes (5) überschreitet.

2. Schaltungsanordnung nach Anspruch 1,
wobei die Prüfwicklung (14) eine ausgewählte Sekundärwicklung ist.

3. Schaltungsanordnung nach Anspruch 1 oder 2,
**dadurch gekennzeichnet,**
**daß** zwischen die Ausgänge (16,17) der Prüfwicklung (14) und dem weiteren Widerstand (12) ein Gleichrichter (15) geschaltet ist.

4. Schaltungsanordnung nach Anspruch 1 oder 2,
**dadurch gekennzeichnet,**
**daß** die Prüfwicklung (14) als Einphasenwicklung ausgebildet ist.

5. Schaltungsanordnung nach einem der Ansprüche 1 bis 4,
**gekennzeichnet durch**
einen Hilfskontakt (13) im Schütz (5), der parallel zum weiteren Widerstand (12) geschaltet ist und mit den Schaltern (6) des Schützes (5) so verbunden ist, daß der Hilfskontakt (13) bei offener Schalterstellung geschlossen ist und umgekehrt.

## Claims

1. Circuit arrangement for limiting the inrush current for a transformer (1)
having a contactor (5) to whose circuit inputs the operating voltage (4) for the transformer (1) is applied and whose circuit outputs are connected to the primary windings (2) of the transformer (1),
having series-connected ohmic resistors (10) and PTC thermistors (11) which are connected in parallel with the contactor (5), **characterized by**
a test winding (14) on the secondary side (3) of the transformer (1) having at least two connections (16, 17),
having a further resistor (12), with the further resistor (12) being connected between a first connection (16) of the test winding (14) and the supply input (7) of the contactor (5), and
with the supply output (8) of the contactor being connected to a second connection (17) of the test winding (4),
with the contactor (5) closing and bridging the series-connected ohmic resistors (10) and PTC thermistor (11) when the voltage which is induced in the test winding (4) and is present at the supply input (7) and the supply output (8) exceeds the switching threshold of the contactor (5).

2. Circuit arrangement according to Claim 1,
with the test winding (14) being a selected secondary winding.

3. Circuit arrangement according to Claim 1 or 2,
**characterized**
**in that** a rectifier (15) is connected between the outputs (16, 17) of the test winding (14) and the further resistor (12).

4. Circuit arrangement according to Claim 1 or 2,
**characterized**
**in that** the test winding (14) is in the form of a single-phase winding.

5. Circuit arrangement according to one of Claims 1 to 4,
**characterized by**
an auxiliary contact (13) in the contactor (5), which is connected in parallel with the further resistor (12) and is connected to the switches (6) in the contactor (5), such that the auxiliary contact (13) is closed in the open switch position, and vice versa.

## Revendications

1. Circuit pour la limitation du courant d'appel d'un transformateur (1) avec un contacteur (5), sur les entrées duquel la tension de service (4) du transformateur (1) est appliquée et dont les sorties sont raccordées aux bobinages primaires (2) du transformateur (1),
avec des résistances ohmiques (10) couplées en série et des conducteurs à froid (11) couplés en parallèle au contacteur (5), **caractérisé par**
un bobinage de contrôle (14) du côté secondaire (3) du transformateur (1) ayant au moins deux connexions (16, 17), étant couplé à une résistance supplémentaire (12), la résistance supplémentaire (12) étant connectée entre
une première connexion (16) du bobinage de contrôle (14) et l'entrée d'alimentation (7) du contacteur (5), et
la sortie d'alimentation (8) du contacteur étant raccordée à une seconde connexion (17) du bobinage de contrôle (4),
le contacteur (5) se fermant et court-circuitant les résistances ohmiques (10) couplées en série et les conducteurs à froid (11) lorsque la tension induite dans le bobinage de contrôle (4) et appliquée à l'entrée d'alimentation (7) et à la sortie d'alimentation (8) dépasse le seuil de commutation du contacteur (5).

2. Circuit selon la revendication 1,
le bobinage de contrôle (14) étant un bobinage secondaire sélectionné.

3. Circuit selon la revendication 1 ou 2,
**caractérisé en ce que**
un redresseur (15) est couplé entre les sorties (16, 17) du bobinage de contrôle (14) et la résistance supplémentaire (12).

4. Circuit selon la revendication 1 ou 2,
**caractérisé en ce que**
le bobinage de contrôle (14) est formée comme bobinage monophasé.

5. Circuit selon l'une des revendications 1 à 4,
**caractérisé par**
un contact auxiliaire (13) dans le contacteur, qui est couplé en parallèle à la résistance supplémentaire (12) et est raccordé aux commutateurs (6) du contacteur de telle manière que le contact auxiliaire (13) est fermé lorsque le commutateur est en position ouverte et vice versa.
